# EUROPÄISCHE PATENTANMELDUNG

(11) **EP 2 410 299 A2**
(43) Veröffentlichungstag der Anmeldung: **25.01.2012**
(21) Anmeldenummer: 11005531.6
(22) Anmeldetag: 06.07.2011
(51) Int. Cl.: G01F 1/66, G01F 15/14, G01F 15/18

(54) **Gehäuse für eine Ultraschall-Messeinrichtung zur Messung eines Fluidflusses und Verfahren zur Herstellung eines Gehäuses**

(30) Priorität: 21.07.2010 DE 102010031753; 10.08.2010 DE 102010033858
(71) Anmelder: Hydrometer GmbH, 91522 Ansbach (DE)
(72) Erfinder: Horn, Roland, 91629 Weihenzell (DE); Dietz, Gerhard, 91586 Lichtenau (DE); Glatter, Thomas, 91522 Ansbach (DE); Kroemer, Harald, 91522 Ansbach (DE); Öfelein, Wilhelm, 91522 Ansbach (DE); Schmidt-Schoenian, Axel, 91732 Merkendorf (DE); Schiller, Stefan, 91522 Ansbach (DE)
(74) Vertreter: Diehl Patentabteilung

(57) **Zusammenfassung**

Gehäuse (1a-1i) für eine Ultraschall-Messeinrichtung eines Fluidflusses, umfassend einen Fluideinlass (4), einen Fluidauslass (5), einen Messbereich (8) mit einer Messtrecke und wenigstens zwei Ankopplungsbereiche (6), insbesondere Ankopplungsflächen, für einen Ultraschalltransducer, wobei das Gehäuse (1a-1i) zwei im Bereich der Messstrecke verbundene und/oder verbindbare, getrennt hergestellte Gehäuseteile (2, 3) umfasst, wobei das den Fluideinlass (4) und das den Fluidauslass (5) umfassende Gehäuseteil (2, 3) jeweils wenigstens einen Ankopplungsbereich (6) umfassen.

## Beschreibung

Die Erfindung betrifft ein Gehäuse für eine Ultraschall-Messeinrichtung zur Messung eines Fluidflusses, umfassend einen Fluideinlass, einen Fluidauslass, einen Messbereich mit einer Messstrecke und wenigstens zwei Ankopplungsbereiche, insbesondere Ankopplungsflächen, für einen Ultraschalltransducer, sowie ein Verfahren zur Herstellung eines solchen Gehäuses. Daneben betrifft die Erfindung eine Ultraschall-Messeinrichtung mit einem Gehäuse.

Ultraschall-Messeinrichtungen zur Messung eines Fluidflusses, häufig auch als Ultraschalldurchflussmesser bezeichnet, sind bekannt und werden üblicherweise eingesetzt, um den Durchfluss von Gasen oder Flüssigkeiten, also Fluiden, durch ein Rohrsystem zu messen. Das verbreitetste Einsatzgebiet solcher Ultraschalldurchflussmesser betrifft dabei Wasser als Fluid.

Die Ultraschall-Messeinrichtungen umfassen dabei häufig ein Gehäuse, welches zwei Rohrabschnitten des zu vermessenden Rohrsystems zwischengeschaltet wird. Entsprechend umfassen solche Gehäuse einen Fluideinlass und einen Fluidauslass, zwischen denen ein Messbereich angeordnet ist, in dem die letztendliche Ultraschallmessung stattfindet. So sind beispielsweise Ultraschall-Messeinrichtungen bekannt, in denen Ultraschall durch zwei Transducer senkrecht zur Flussrichtung des Fluids in den Messbereich eingekoppelt wird, wo zwei insbesondere im 45°-Winkel angeordnete Schallreflektoren den Ultraschallstrahl in Flussrichtung bzw. gegen die Flussrichtung auf den jeweils anderen Schallreflektor lenken, von wo aus sie durch den jeweils anderen Transducer wieder gemessen werden können. Es ist also insgesamt eine U-förmige Signaltransportstrecke gegeben. Aus der unterschiedlichen Laufzeit gegen den Fluidfluss und mit dem Fluidfluss kann nun die Flussgeschwindigkeit und mithin der Durchfluss bestimmt werden.

Es wurden auch Ausführungsformen vorgeschlagen, die einen Messeinsatz umfassen, der für einen bestimmten Nenndurchfluss hergestellt wird und das Messrohr und zwei metallische Reflektoren umfasst, sowie gegebenenfalls eine gemeinsame Halterung dieser Bauteile. Ein solcher Messeinsatz wird in ein Messinggehäuse eingeschoben und kann beispielsweise mit einem Fixierzapfen, der über eine kleine, zwischen den Öffnungen für die Wandler liegende weitere Öffnung des Messeinsatzes eingeschoben wird, in dem Messinggehäuse fixiert werden. Eine derartige Ausgestaltung ist beispielsweise in DE 103 27 076 B3 beschrieben.

Gehäuse für Ultraschall-Messeinrichtungen müssen verschiedene Anforderungen erfüllen. Zum einen muss eine hinreichende Messgenauigkeit gegeben sein, da die Messergebnisse häufig genutzt werden, um beispielsweise eine Abrechnung bei einem Kunden vorzunehmen. Zum anderen besteht ein Bedarf für einfach, schnell und günstig herzustellende Gehäuse, um die Produktions-, Installations-und Zusammenbaukosten der Ultraschall-Messeinrichtung zur Messung eines Fluidflusses zu reduzieren.

Ein neuartiges, aus Kunststoff bestehendes Gehäuse einer Ultraschall-Messeinrichtung wurde durch die EP 2 037 231 A1 vorgeschlagen. Dieses umfasst ein monolithisches spritzgegossenes Kunststoffgehäuse mit U-förmiger Führung des Schallstrahls und zwei planen, parallel zur Durchflussrichtung ausgerichteten Flächen zum Einkoppeln des Ultraschalls. Derlei Gehäuse weisen jedoch eine Vielzahl von Nachteilen auf. Denn das Gehäuse, welches durch die EP 2 037 231 A1 beschrieben wird, benötigt innen eine gesonderte Reflektorhalterung zur Anordnung der Schallreflektoren, die mit Kosten bei ihrer Herstellung sowie ihrer Montage verbunden ist. Zum anderen tritt in dem monolithisch aufgebauten Kunststoffgehäuse parasitärer Schall auf, also solcher Ultraschall, der beim Durchschallen des Kunststoffgehäuses zwar zunächst wie vorgesehen in die Kunststoffwand eindringt, dann aber, statt auf der gegenüberliegenden Seite der Wand wieder auszutreten, sich weiter innerhalb des Kunststoffgehäuses ausbreitet, so auf anderen Wegen als durch die vorgesehene Messstrecke zum anderen Transducer gelangt und dort ein Signal erzeugt, das dem eigentlichen Messsignal überlagert wird.

Der Erfindung liegt daher die Aufgabe zugrunde, ein Ultraschall-Gehäuse und ein Verfahren zu dessen Herstellung anzugeben, welches bei einfacher, kostengünstiger und aufwandsarmer Herstellung insbesondere die beschriebenen Nachteile bezüglich der Reflektorhalterung und des parasitären Schalls vermeidet.

Zur Lösung dieser Aufgabe ist bei einem Gehäuse der eingangs genannten Art erfindungsgemäß vorgesehen, dass das Gehäuse zwei im Bereich der Messstrecke verbundene und/oder verbindbare, getrennt hergestellte Gehäuseteile umfasst, wobei das den Fluideinlass und das den Fluidauslass umfassende Gehäuseteil jeweils wenigstens einen Ankopplungsbereich umfassen.

Es wird also vorgeschlagen, von einer monolithischen Gestaltung des Gehäuses abzuweichen, und dieses in zwei Gehäuseteilen vorzusehen, so dass die beiden Gehäuseteile zu dem Gesamtgehäuse verbunden werden können. Die Trennung erfolgt dabei letztlich mittig, nämlich zwischen den beiden Ankopplungsstellen für die Ultraschall-Transducer, welche beispielsweise als plane Flächen, die parallel zueinander und/oder parallel zur Durchflussrichtung stehen, ausgebildet sein können. Dabei kann die Verbindungsstelle zwischen den beiden Gehäuseteilen zweckmäßigerweise in einer Mittelebene des Gehäuses in Durchflussrichtung liegen, das bedeutet, dass letztlich zwei im Wesentlichen symmetrische oder gar identische Gehäuseteile gegeben sein können. Dies kann herstellungstechnisch von Vorteil sein, da bei bestimmten Ausgestaltungen dann vorgesehen sein kann, dieselbe oder eine im Wesentlichen gleiche Spritzform zu verwenden, um die Gehäuseteile zu erzeugen.

Wie bereits erwähnt, können die Gehäuseteile bevorzugt spritzgegossen sein und/oder aus Kunststoff bestehen. Kunststoff ist ein günstiges, gut bearbeitbares Rohmaterial, so dass die Gehäuseteile nach bekannten Verfahren einfach und kostengünstig durch Spritzguss hergestellt werden können.

Das erfindungsgemäß ausgebildete Gehäuse weist zwei weitere, hauptsächliche Vorteile auf. Zum einen hilft die erfindungsgemäß vorgesehene Teilung des Gehäuses in zwei Gehäuseteile, den parasitären Schall zu unterdrücken. Durch eine Querteilung des Gehäuses, insbesondere des Kunststoffgehäuses, wird eine Schallübertragung durch das Kunststoffgehäuse selber von einem UltraschallTransducer zum anderen Ultraschall-Transducer wenigstens teilweise unterdrückt, so dass ein verbessertes Messsignal erhalten wird.

Ein weiterer wichtiger Vorteil der vorliegenden Erfindung ist es, dass mit einer derartigen zweiteiligen Ausgestaltung des Gehäuses auf eine Reflektorhalterung verzichtet werden kann, da es möglich wird, den Spritzguss so vorzunehmen, dass entweder Teile des Gehäuses als Reflektorhalterung ausgebildet sein können oder gar ein Schallreflektor in das Gehäuse integriert wird. So kann beispielsweise vorgesehen sein, dass jedes der beiden Gehäuseteile eine aus dem Material des Gehäuses ausgebildete Reflektorhalterung für einen Schallreflektor umfasst. Dabei kann es sich beispielsweise um Ausbildungen aus der Gehäusewand handeln, die letztlich eine entsprechend der gewünschten Reflektorneigung geneigte Fläche aufweisen, wobei, beispielsweise nach Art eines Einschubs, insbesondere am Rand der geneigten Fläche Befestigungsmittel vorgesehen sein können, beispielsweise eine Schnapphalterung oder dergleichen. Zum Aufbau des Gehäuses kann dann einfach der Schallreflektor in die Reflektorhalterung eingesetzt werden, wonach die Gehäuseteile verbunden werden können.

In bevorzugter Ausgestaltung jedoch kann vorgesehen sein, dass jedes Gehäuseteil im Inneren wenigstens einen in das Gehäuseteil integrierten, insbesondere gegenüber einem Ankopplungsbereich angeordneten Schallreflektor aufweist. In diesem Fall wird also bereits bei der Herstellung des Gehäuseteils der Schallreflektor in das Gehäuse integriert, so dass eine exakte Positionierung gegeben ist und keine weitere Montage mehr notwendig ist. Derartiges ist allein dann praktikabel möglich, wenn das Gehäuse in zwei Gehäuseteilen gefertigt wird, da ansonsten ein Teil des Spritzgusswerkzeugs im Messbereich zwischen den beiden zur Reflexion des Schalls entlang der Messstrecke positionierten Schallreflektoren unentnehmbar enthalten wäre.

Bei der Integration des Schallreflektors in die Gehäuseteile sind im Wesentlichen zwei Ausgestaltungen möglich. So kann zum einen vorgesehen sein, dass der Schallreflektor als Teil des Gehäuseteils ausgebildet ist. Das bedeutet, es wird insbesondere bei einer Ausbildung des Gehäuses aus Kunststoff ganz auf metallische Reflektoren verzichtet und unter Verlust an Signalamplitude mit Kunststoff reflektiert. Dabei kann, insbesondere bei Verwendung eines Zweikomponentenspritzgussverfahrens, mit besonderem Vorteil vorgesehen sein, dass die für die Reflexion verwendeten Kunststoffflächen des Schallreflektors aus einem gefüllten, insbesondere metallgefüllten, Kunststoff bestehen, der aufgrund seiner höheren Dichte und damit höheren akustischen Impedanz besser reflektiert. Eine andere Möglichkeit ist es, einen lufthinterfüllten Reflektor zu verwenden, bei dem die Übergangsfläche von Kunststoff zu Luft die eigentliche Reflektionsfläche bildet.

Bevorzugt ist es jedoch, wenn ein insbesondere metallischer Schallreflektor in das Gehäuse vergossen ist. Der Reflektor bildet dabei folglich ein Einlegeteil, das zumindest teilweise halternd durch das Gehäusematerial, insbesondere Kunststoff, umgeben wird. Dabei kann bevorzugt vorgesehen sein, dass der insbesondere metallische Schallreflektor so eingebettet ist, dass er mit seiner reflektierenden Oberfläche Kontakt zu dem Fluid, insbesondere Wasser, hat. So ist eine hervorragende Schallreflexion ohne größere Signalverluste möglich. Denkbar ist es jedoch aus, das den Schallreflektor bildende Einlegeteil so zu spritzen, dass es auf der dem Schallstrahl zugewandten Seite mit einer relativ dünnen Haut aus Kunststoff überzogen ist.

In Weiterbildung der Erfindung kann vorgesehen sein, dass der Schallreflektor eine den Schall von dem Ankopplungsbereich zu dem anderen Reflektor und umgekehrt reflektierende Fläche aufweist. Insbesondere kann im Rahmen der vorliegenden Erfindung auch der bereits beschriebene letztlich U-förmige Schallweg realisiert werden, indem die Ankopplungsbereiche und die Ausrichtung der Ultraschall-Transducer so gewählt ist, dass der Schallstrahl senkrecht zur Durchflussrichtung eingekoppelt wird. Sind die Schallreflektoren so ausgebildet, dass sie eine in Flussrichtung um 45° gekippte, gegenüber des Ankopplungsbereichs angeordnete reflektierende Fläche aufweisen, so wird der auf sie auftreffende Schallstrahl in Durchflussrichtung (bzw. gegen Durchflussrichtung) reflektiert, bis er auf den jeweils anderen Schallreflektor trifft, wo er wieder in Richtung des anderen Ultraschall-Transducers reflektiert wird und dort empfangen wird. Eine Messung kann dabei beispielsweise so erfolgen, dass zeitgleich zwei Ultraschall-Signale von den beiden Ultraschall-Transducern ausgesendet werden. Nachdem die Signalausbreitung in Durchflussrichtung schneller ist als die Signalausbreitung entgegen der Durchflussrichtung ist, kann die Durchflussrate durch Messung des Unterschieds in der Ankunftszeit der beiden Ultraschall-Signale an dem jeweils anderen Ultraschall-Transducer bestimmt werden. Dabei kann die Ermittlung der Durchflussrate, gegebenenfalls auch die Ausgabe der Durchflussrate, durch eine analoge oder digitale Einheit erfolgen, die die Messsignale der Ultraschall-Transducer empfängt.

Die Verbindung der beiden Gehäuseteile kann auf unterschiedliche Art und Weise erfolgen. So kann in einer ersten Erfindungsalternative vorgesehen sein, dass die Gehäuseteile stoffschlüssig verbunden oder verbindbar sind, insbesondere durch eine Klebeverbindung und/oder eine Schweißverbindung. Der Stoffschluss durch Verschweißen kann dabei bevorzugt durch Ultraschallschweißen oder Vibrationsschweißen hergestellt werden, wobei alternativ auch eine Verklebung zur Erzeugung eines Stoffschlusses möglich ist.

In einer zweiten Erfindungsalternative können die Gehäuseteile bevorzugt kraftschlüssig und/oder formschlüssig verbunden oder verbindbar sein. Dazu kann beispielsweise vorgesehen sein, dass zur formschlüssigen Verbindung der Gehäuseteile ein Bajonettverschluss vorgesehen ist, über den ein Formschluss ermöglicht wird. Zur kraftschlüssigen Verbindung der Gehäuseteile kann eine Flanschverbindung und/oder eine mit einem Außengewinde der Gehäuseteile korrespondierende Überwurfmutter und/oder ein insbesondere u-förmiger Verbindungsbügel, der in entsprechende, insbesondere parallel verlaufende Aufnahmeöffnungen der Gehäuseteile eingeschoben ist, vorgesehen sein und/oder die Gehäuseteile können mit zueinander korrespondierenden Gewinden versehen sein, wobei insbesondere ein Außengewinde an einem Gehäuseteil und ein korrespondierendes Innengewinde an dem anderen Gehäuseteil vorgesehen ist. Ersichtlich sind verschiedenste Möglichkeiten denkbar, den Kraftschluss und/oder Formschluss herzustellen.

In anderen Möglichkeiten zur Herstellung eines Formschlusses kann vorgesehen sein, dass ein Verbindungsmaterial, insbesondere im Rahmen eines Zweikomponentenverfahrens eingebracht, oder ein verbindendes Bauelement, welches über ein insbesondere im Rahmen eines Zweikomponentenverfahrens eingebrachtes Verbindungsmaterial mit den Gehäuseteilen (2, 3) verbunden, vorgesehen ist. So ist es beispielsweise denkbar, als Verbindungsmaterial eine bei der Applikation flüssige Masse zu verwenden, die dann aushärtet und die beiden Gehäuseteile verbindet. Derartiges kann im Rahmen eines Zweikomponentenspritzgusses realisiert werden, wobei das Verbindungsmaterial bzw. im ausgehärteten Zustand die verbindende Komponente harte aber auch "weiche", das heißt elastische, Eigenschaften haben kann. Eine weitere Möglichkeit stellt das Anbringen eines verbindenden Bauelements über ein Verbindungsmaterial dar. Auch dort kann letztlich als Verbindungsmaterial eine zum Zeitpunkt der Applikation flüssige Vergussmasse verwendet werden, welche ebenfalls nach Erreichen der Endeigenschaften elastische oder auch "harte" Eigenschaften aufweisen kann. In beiden hier beschriebenen Fällen kann das Verbindungsmaterial bzw. die Vergussmasse beispielsweise Flüssigsilikon oder Polyurethan sein; auch andere Vergussmaterialen sind denkbar. Eine derartige "Verbindungskomponente" übernimmt zweckmäßigerweise sowohl die Kraftübertragung zwischen den beiden Gehäuseteilen wie auch die Abdichtung nach außen.

Bevorzugt kann zur Abdichtung der Verbindung zwischen den Gehäuseteilen ein Dichtelement, insbesondere ein Dichtring, vorgesehen sein. Die beiden Gehäuseteile können also in dieser zweiten Erfindungsalternative unter Verwendung eines Dichtringes zusammengefügt werden. Hierbei ist sowohl radiale als auch zur axiale Dichtung möglich.

Zweckmäßigerweise kann vorgesehen sein, dass das Gehäuse eine insbesondere im Bereich einer Reflektorhalterung ausgebildete Temperaturfühleraufnahme, insbesondere eine Vertiefung mit einer zum Inneren des Gehäuses hin zumindest teilweise dünneren Wand aufweist. Auf diese Weise kann ein Temperaturfühler, der die Temperatur des Fluids messen soll, ebenso in das Gehäuse integriert werden. Es kann also auch vorgesehen sein, dass das Gehäuse den in die Temperaturfühleraufnahme eingesetzten Temperaturfühler umfasst. Die Aufnahme, insbesondere als dünnwandige Vertiefung ausgebildet, kann mit besonderem Vorteil im Bereich oder als Teiler einer Reflektorhalterung vorgesehen sein.

Das Material des Gehäuses, insbesondere Kunststoff, bildet also eine Schicht um den Temperaturfühler herum. So wird die Trägheit des Systems bei der Reaktion auf Temperaturerhöhungen erhöht. Dem kann entgegengewirkt werden, wenn im Bereich des Temperaturfühlers metallgefüllter Kunststoff verwendet wird, das bedeutet, die den Temperaturfühler von dem Fluid trennende Wand kann aus metallgefülltem Kunststoff bestehen und beispielsweise über ein Zweikomponentenverfahren erzeugt werden. Da damit einer bessere Wärmeleitfähigkeit im Bereich der Wand gegeben ist, wird der oben beschriebene Trägheitseffekt abgemildert.

Die Verwendung eines metallgefüllten Kunststoffs an der Temperaturfühleraufnahme kann vorteilhaft mit der oben erwähnten Ausgestaltung der Reflektorfläche aus einem gefüllten Kunststoff kombiniert werden, um dort die akustische Impedanz zu erhöhen. Somit ist es möglich, im Bereich eines Reflektors einen metallgefüllten Kunststoff mit doppelter Funktionalität einzusetzen, nämlich einmal zur Erhöhung der akustischen Impedanz und einmal zur Erhöhung der Wärmeleitfähigkeit.

Weiterhin kann vorgesehen sein, dass das Gehäuse einen rohrartigen, den Durchmesser des Gehäuses im Messbereich, insbesondere entlang der gesamten Messstrecke reduzierenden Einsatz, insbesondere ein Messrohr, umfasst. Da das Gehäuse ja aus zwei Gehäuseteilen zusammengesetzt ist, ist es bei der Herstellung einfach möglich, im Messbereich, insbesondere zwischen den Reflektoren bzw, Reflektorhalterungen, einen Einsatz, insbesondere ein Messrohr, einzubringen, bevor die beiden Hälften miteinander verbunden werden. So wird es ermöglicht, für Ultraschall-Messeinrichtungen (Fluidzähler) verschiedenen Nenndurchflusses das selbe Gehäuse einzusetzen, wobei bei einem geringeren Nenndurchfluss durch ein zusätzlich eingebrachtes Messrohr die Strömungsgeschwindigkeit entlang der Messtrecke erhöht wird.

In einer weiteren, besonders vorteilhaften Ausführungsform kann in diesem Zusammenhang auch vorgesehen sein, dass das Gehäuse einen ein Messrohr und zwei Reflektorhalterungen aufweisenden Messeinsatz umfasst. Es kann also auch auf die bewährte Technologie der Messeinsätze zurückgegriffen werden, wie sie beispielsweise aus der eingangs genannten DE 103 27 076 B3 bekannt sind, so dass die Reflektorhalterungen nicht zwangsläufig aus den Gehäuseteilen selbst ausgebildet sein müssen. Die Querteilung des erfindungsgemäßen Gehäuses kann dabei genutzt werden, um den Messeinsatz beim Zusammenbau zwischen den beiden Gehäuseteilen zu fixieren, und zwar so, dass die Reflektorhalterungen in einer Position gegenüber den Ankopplungsbereichen zu liegen kommen, so dass der Messvorgang problemlos erfolgen kann. Ist das Messrohr gegen die Gehäuseteile abgedichtet, kann im Übrigen auch vorgesehen sein, dass in den Ankopplungsbereichen eine Öffnung vorgesehen ist, um den Ultraschallwandler in direkten Kontakt mit dem Messrohr zu bringen. An den Reflektorhalterungen können bereits Reflektoren angeordnet sein.

Auch bei dieser Ausgestaltung ist es besonders vorteilhaft, dass bei Verwendung eines Messeinsatzes mit einem Messrohr vorbestimmten Durchmessers ein Nenndurchfluss festgelegt werden kann. Das bedeutet im übrigen auch, dass nicht für jede Nenngröße spezielle Gehäuseteile gefertigt werden müssen, sondern lediglich ein anderer Messeinsatz verwendet werden muss, um den gewünschten Nenndurchfluss zu erhalten.

In zweckmäßiger Weiterbildung dieser Ausführungsform kann vorgesehen sein, dass der Messeinsatz, insbesondere außen an dem Messrohr vorgesehene, Halterungselemente, insbesondere Halterungsvorsprünge und/oder Halterungsnuten, aufweist, die mit Halterungselementen, insbesondere Halterungsnuten und/oder Halterungsvorsprüngen, der Gehäuseteile korrespondieren, um den Messeinsatz innerhalb der Gehäuseteile translations- und verdrehsicher zu halten. Beispielsweise kann also vorgesehen sein, dass der Messeinsatz wenigstens eine Verdickung aufweist und die Gehäuseteile entsprechende Aussparungen. So kann zum einen sichergestellt werden, dass die Ausrichtung der Ankopplungsbereiche zu den Reflektorhalterungen im Rotationssinn korrekt ist, zum anderen ein versehentliches Verschieben des Messeinsatzes innerhalb der Gehäuseteile vermieden werden.

Neben dem Gehäuse betrifft die Erfindung auch ein Verfahren zur Herstellung eines erfindungsgemäßen Gehäuses, welches sich dadurch auszeichnet, dass die Gehäuseteile einzeln spritzgegossen werden. Insbesondere kann dabei als Material Kunststoff vorteilhaft eingesetzt werden. Es wird also mit dem Herstellungsverfahren ein erfindungsgemäßes Gehäuse erhalten, so dass auch die entsprechenden Vorteile erhalten werden können. Das Herstellungsverfahren ist einfach und kostengünstig sowie aufwandsarm durchzuführen und erlaubt es dennoch, den Anforderungen an die Messgenauigkeit gerecht zu werden. Letztlich lassen sich sämtliche Ausführungen bezüglich des erfindungsgemäßen Gehäuses auch auf das erfindungsgemäße Verfahren übertragen.

So kann mit besonderem Vorteil vorgesehen sein, dass während des Spritzvorgangs in den Gehäuseteilen eine Reflektorhalterung für einen Schallreflektor ausgebildet wird oder ein Schallreflektor aus dem Material des Gehäuseteils selber gegossen wird. Mit besonderem Vorteil ist jedoch vorgesehen, dass während des Spritzgussvorgangs ein einen Schallreflektor bildendes Einlegeteil in den Gehäuseteilen vergossen wird. Auf diese Weise kann weiterhin ein metallischer Reflektor verwendet werden, der jedoch in das Gehäuse integriert ist.

Schließlich betrifft die Erfindung noch eine Ultraschall-Messeinrichtung zur Messung eines Fluidflusses mit einem erfindungsgemäßen Gehäuse. Die Ultraschall-Messeinrichtung wird also letztlich dadurch verbessert, dass sie das erfindungsgemäße Gehäuse umfasst, wobei sich sämtliche Ausführungen zum erfindungsgemäßen Gehäuse selbstverständlich analog auf die erfindungsgemäße Ultraschall-Messeinrichtung übertragen lassen. Mithin können auch im Fall der Ultraschall-Messeinrichtung die genannten Vorteile erreicht werden.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Gehäuse in einer ersten Ausführungsform,
- Fig. 2: ein erfindungsgemäßes Gehäuse in einer zweiten Ausführungsform,
- Fig. 3: ein erfindungsgemäßes Gehäuse in einer dritten Ausführungsform,
- Fig. 4: ein erfindungsgemäßes Gehäuse in einer vierten Ausführungsform,
- Fig. 5: ein erfindungsgemäßes Gehäuse in einer fünften Ausführungsform,
- Fig. 6: ein erfindungsgemäßes Gehäuse in einer sechsten Ausführungsform,
- Fig. 7: ein erfindungsgemäßes Gehäuse in einer siebten Ausführungsform,
- Fig. 8: einen Längsschnitt durch ein erfindungsgemäßes Gehäuse in einer ersten Innenausbildung,

- Fig. 9: einen Längsschnitt durch ein erfindungsgemäßes Gehäuse in einer zweiten Innenausbildung,
- Fig. 10: einen Längsschnitt durch ein erfindungsgemäßes Gehäuse in einer dritten Innenausbildung,
- Fig. 11: ein erfindungsgemäßes Gehäuse in einer achten Ausführungsform,
- Fig. 12: die Innenausbildung des Gehäuses aus Fig. 11 als Längsschnitt,
- Fig. 13: ein erfindungsgemäßes Gehäuse in einer neunten Ausführungsform,
- Fig. 14: einen Teilquerschnitt durch das Gehäuse gemäß Fig. 13,
- Fig. 15: ein erfindungsgemäßes Gehäuse in einer zehnten Ausführungsform,
- Fig. 16: einen Querschnitt durch das Gehäuse gemäß Fig. 15 und
- Fig. 17: eine Prinzipskizze eines erfindungsgemäßen Gehäuses in einer elften Ausführungsform mit darin angeordnetem Messeinsatz.

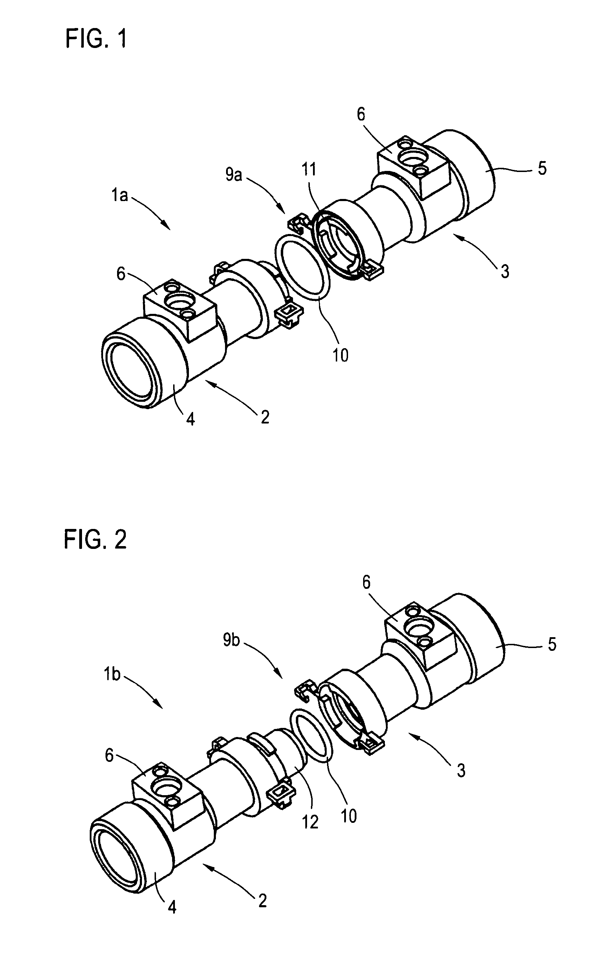

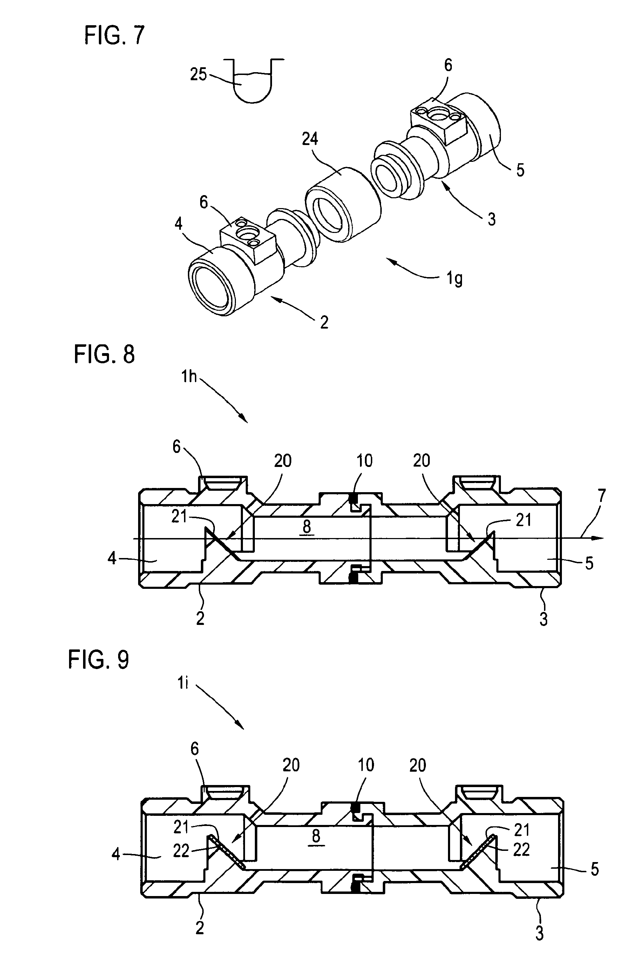

Im Folgenden werden verschiedene Ausführungsformen des erfindungsgemäßen Gehäuses dargestellt, wobei der Einfachheit halber durchweg gleiche Bezugszeichen für gleiche Komponenten verwendet werden. Es sei zudem angemerkt, dass jede der in den Fig. 8 ― 10 gezeigten Innenausgestaltungen in jeder der Ausführungsformen der Fig. 1 ― 7 eingesetzt werden kann. Ein erfindungsgemäßes Gehäuse 1a ― 1 k umfasst grundsätzlich ein erstes Gehäuseteil 2 und ein zweites Gehäuseteil 3, die beide aus spitzgegossenem Kunststoff bestehen. Beide Gehäuseteile werden bei der Herstellung einzeln spritzgegossen. Das erste Gehäuseteil 2 umfasst dabei einen Fluideinlass 4, während das zweite Gehäuseteil 3 einen Fluidauslass 5 umfasst. Beide Gehäuseteile 2, 3 umfassen jeweils einen Ankopplungsbereich 6 mit einer Ankopplungsfläche mit Vertiefungen, auf die ein Ultraschall-Transducer (hier nicht dargestellt) aufgesetzt werden kann.

Der Fluideinlass 4 und der Fluidauslass 5 definieren letztlich die Durchflussrichtung 7 (vgl. Fig. 7), in der das Fluid, beispielsweise Wasser, durch das Gehäuse 1 strömt. Zwischen dem Fluideinlass und dem Fluidauslass ist ein Messbereich 8 angeordnet. Wie aus den Figuren ersichtlich ist, ist die Unterteilung des Gehäuses 1 im Wesentlichen mittig vorgenommen, das bedeutet, jedes Gehäuseteil 2, 3 umfasst im Wesentlichen die Hälfte des Gehäuses 1.

Die Fig. 1 ― 6 zeigen Ausführungsformen des erfindungsgemäßen Gehäuses 1, welche jeweils mit dem Bezugszeichen 1a ― 1f bezeichnet sind, in einem Zustand, in dem die Gehäuseteile 2, 3 noch nicht verbunden sind, folglich in einer Explosionsansicht, und stellen verschiedene Verbindungsmöglichkeiten der Gehäuseteile 2, 3 dar.

So zeigt Fig. 1 ein Gehäuse 1a einer ersten Ausführungsform, welches einen Bajonettverschluss 9a mit einem zwischen den Gehäuseteilen 2, 3 anzuordnenden Dichtring 10 aufweist. Das erste Gehäuseteil 2 und das zweite Gehäuseteil 3 können wie bei Bajonettverschlüssen grundsätzlich bekannt durch Ineinanderstecken und entgegengesetztes Drehen verbunden werden. Der Dichtring 10 wird dabei so in einer Aufnahme 11 angeordnet, dass ein axiales Austreten von Flüssigkeit an der Verbindungsstelle vermieden wird; es handelt sich mithin um eine axiale Abdichtung.

Eine etwas andere Ausführungsform eines Gehäuses 1b mit einem Bajonettverschluss 9b zeigt Fig. 2. Dort ist ein Gehäuseabschnitt 12 am ersten Gehäuseteil 2 vorgesehen, der in das zweite Gehäuseteil 3 einzuführen ist. Der Dichtring 10 wird vor dem Verschließen des Bajonettverschlusses 9b über den Gehäuseabschnitt 12 geschoben, so dass sich letztendlich eine radiale Abdichtung ergibt.

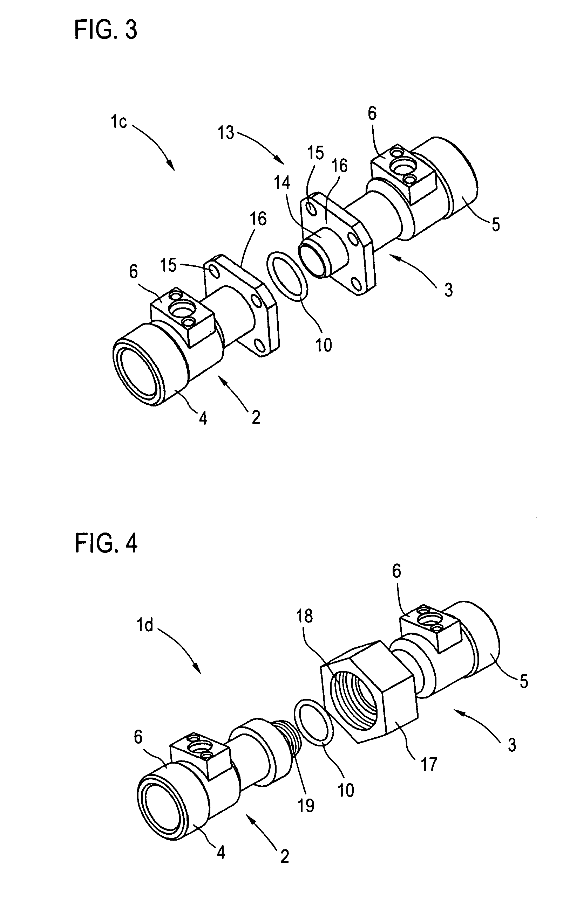

Fig. 3 zeigt eine dritte Ausführungsform eines erfindungsgemäßen Gehäuses 1c. Dort wird die Verbindung zwischen den Gehäuseteilen 2, 3 mittels einer Flanschverbindung 13 hergestellt. Der Dichtring 10 wird wiederum über einen Gehäuseabschnitt 14 geschoben, der in diesem Ausführungsbeispiel am zweiten Gehäuseteil 3 ausgebildet ist und in das erste Gehäuseteil 2 eingeschoben wird, bis sich die mit Durchgangslöchern 15 versehenen Kontaktflächen 16 berühren und die beiden Gehäuseteile durch Bolzen oder Schrauben mittels der Durchgangslöcher 15, welche miteinander fluchten, verbunden werden können.

Ein Gehäuse 1d einer vierten Ausführungsform zeigt die Fig. 4. Dort ist am Gehäuseteil 3 eine Überwurfmutter 17 ausgebildet, die ein Innengewinde 18 aufweist, das mit einem Außengewinde 19 auf einem in die Überwurfmutter einzuführenden Abschnitt des ersten Gehäuseteils 2 korrespondiert. Auch hier kann zur Abdichtung ein Dichtring 10 eingesetzt werden.

Eine Modifikation des Ausführungsbeispiels nach Fig. 4 ergäbe sich, wenn die Überwurfmutter 17 als ein separates Teil mit zwei Innengewinden 18 erzeugt würde, wobei beidseitig ein Gehäuseteil 2, 3 mit einem entsprechenden Außengewinde 19 einschraubbar wäre. Dann ließen sich die Gehäuseteile 2, 3 exakt gleichartig ausbilden.

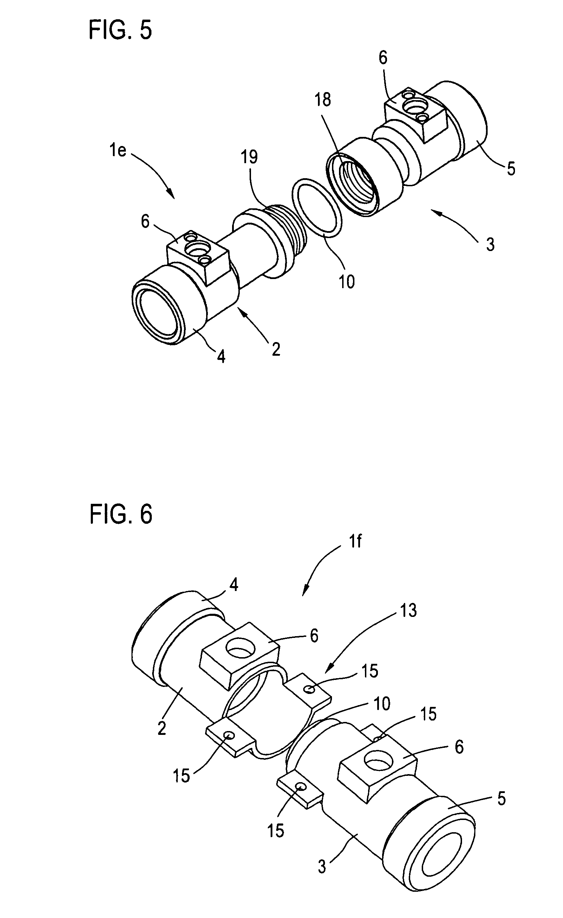

Fig. 5 zeigt ein weiteres Ausführungsbeispiel eines Gehäuses 1e, bei dem ein Gehäuseteil 2 in das andere Gehäuseteil 3 eingeschraubt werden kann, indem ein Gehäuseteil 3 ein Innengewinde 18 und das andere Gehäuseteil 2 ein entsprechendes Außengewinde 19 aufweist.

Das Gehäuse 1f der Fig. 6 weist eine modifizierte Version einer flanschartigen Verbindung 13 auf, bei dem die Verbindung mittels Durchgangslöchern 15 in einer zur Verbindungsebene in Fig. 3 senkrechten Ebene erfolgen kann.

Beim Gehäuse 1 g der Fig. 7 ist ein verbindendes Bauelement 24 vorgesehen, welches die beiden Gehäuseteile 2, 3 im Montagezustand verbindet. Hierzu werden die Lücken bei zusammengesetztem Gehäuse 1g mit einem bei Applikation flüssigen, bei 25 angedeutetem Verbindungsmaterial, also einer Vergussmasse, beispielsweise Flüssigsilikon, aufgefüllt, so dass das Verbindungsmaterial 25 nach dem Aushärten auch abdichtend wirkt.

Es sei an dieser Stelle angemerkt, dass selbstverständlich auch andere Varianten und Möglichkeiten zur Verbindung der beiden Gehäuseteile 2 und 3 vorgesehen werden können, beispielsweise Schnappverbindungen, Schweißverbindungen, Klebeverbindungen oder dergleichen.

Wie bereits erwähnt, ermöglicht die erfindungsgemäße zweiteilige Ausgestaltung des Gehäuses 1, die Schallreflektoren im Gehäuseteil integriert bereits vorzusehen. Verschiedene Möglichkeiten zur Integration von Schallreflektoren zeigen die Fig. 8 ― 10, welche allesamt einen Schnitt durch eine vertikale Mittenebene eines Gehäuses 1 h, 1i oder 1j zeigen. Es sei nochmals hervorgehoben, dass die nun mit Hinblick auf die Fig. 8 ― 10 beschriebenen Ausgestaltungen in allen vorab beschriebenen Ausführungsformen der Gehäuse 1a ― 1g angewendet werden können.

Fig. 8 zeigt dabei eine Ausgestaltung, in der der Schallreflektor 20 als Teil des jeweiligen Gehäuseteils 2, 3 selbst ausgebildet ist. Ersichtlich weisen die Schallreflektoren 20 eine im 45°-Winkel zur Durchflussrichtung 7 stehende reflektierende Fläche 21 auf, die, nachdem die Gehäuseteile 2, 3 in einen Zweikomponenten-Spritzgussverfahren hergestellt wurden, aus einem Kunststoff mit einer höheren Dichte und damit höherer akustischer Impedanz bestehen. Es wird also ein gefüllter Kunststoff für die reflektierenden Flächen 21 verwendet, der eine höhere Schallreflektivität hat.

Ersichtlich ist in den Ausgestaltungen nach Fig. 8 ― 10 der Signalweg so gewählt, dass die Ultraschall-Transducer den Schallstrahl senkrecht zur Durchflussrichtung über den Ankopplungsbereich 6 auf die gegenüberliegenden reflektierende Fläche 21 leiten, von wo aus der Schallstrahl entlang der Durchflussrichtung 7 auf den anderen Schallreflektor 20 gelenkt wird und folglich die eigentliche Messstrecke durchläuft. Dort wird er wiederum in Richtung auf den anderen Ultraschall-Transducer umgelenkt. Es ergibt sich also letztlich ein U-förmiger Signalweg im Messbereich 8.

Es sei noch darauf hingewiesen, dass, wenn entsprechende Haltemittel ausgebildet werden, die Flächen 21 auch als Halterungsvorrichtung für einen nachträglich einzubringenden Schallreflektor, beispielsweise ein Metallplättchen oder dergleichen, verwendet werden kann.

Fig. 9 zeigt eine weitere mögliche Innenausgestaltung, die erfindungsgemäß besonders bevorzugt wird. Dabei wurde ein metallenes Einlegeteil 22, welches die reflektierende Oberfläche 21 bildet, so in das jeweilige Gehäuseteil 2, 3 eingegossen, dass die reflektierende Fläche 21 jedoch nicht von Kunststoff überdeckt ist. Das bedeutet, die reflektierende Fläche 21 steht letztlich im Betriebszustand in unmittelbarem Kontakt mit dem Fluid.

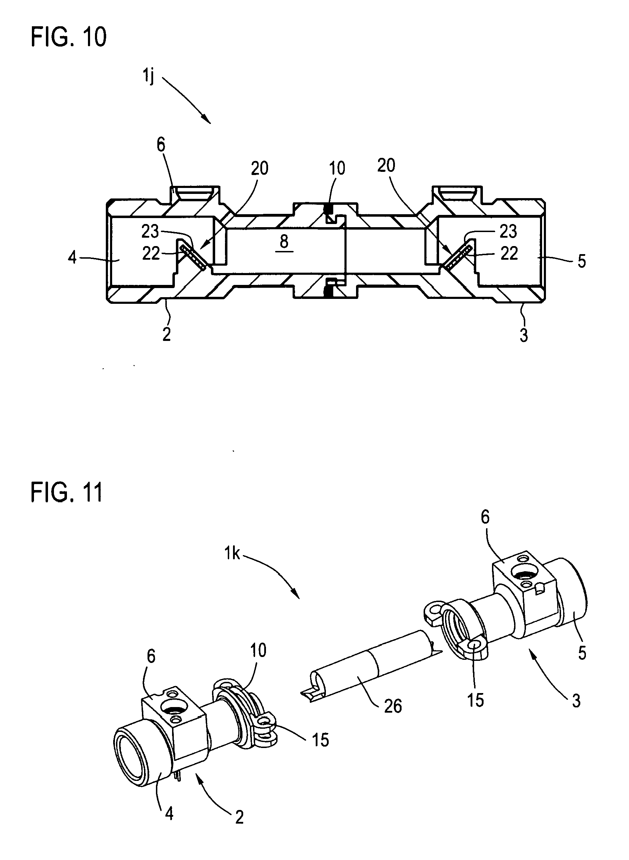

Eine ähnliche Ausgestaltung zeigt die Fig. 10, allerdings das eingegossene metallische Einlegeteil 22 von einen dünnen Schicht 23 aus Kunststoff überzogen ist.

Es sei noch darauf hingewiesen, dass, wenn unterhalb der Schicht 23 beim Spritzgussverfahren ein zugänglicher Hohlraum gelassen wird, dies auch wieder als eine Halterungsvorrichtung dienen kann, in die erst nachträglich ein metallisches Plättchen eingesetzt werden kann.

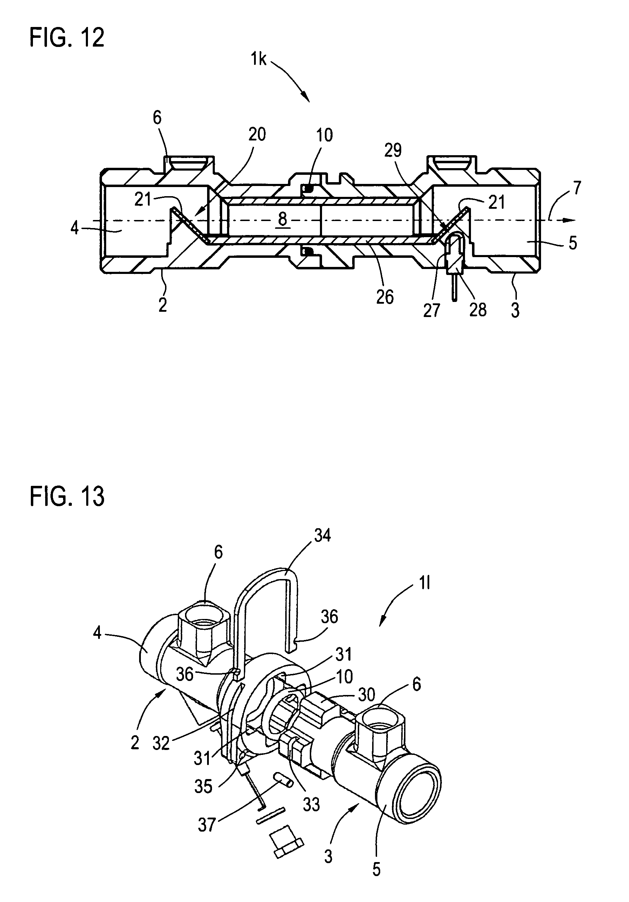

Schließlich zeigen die Fig. 11 und 12 ein weiteres Ausführungsbeispiel eines erfindungsgemäßen Gehäuses 1 k, wobei Fig. 11 wiederum eine Explosionsdarstellung ist und Fig. 12 ein Längsschnitt. Ähnlich wie beim Gehäuse 1f der Fig. 6 ist hier beispielhaft eine mögliche Schraubverbindung mittels der Durchgangslöcher 15 angedeutet, es ist jedoch auch jede andere Verbindungsart denkbar.

Beim Zusammenführen der Gehäuseteile 2, 3 wird im Messbereich 8 hier ersichtlich ein Messrohr 26 als Einsatz aufgenommen, dessen Außenradius dem Innenradius der Gehäuseteile 2, 3 im Messbereich 8 entspricht. Das Messrohr 26 weist, wie der Fig. 12 zu entnehmen ist, eine gewissen Dicke auf, so dass der Durchmesser entlang der Messstrecke im Messbereich 8, also zwischen den Reflektoren 21, erniedrigt wird. So kann das Gehäuse 1k auf einen anderen Nenndurchfluss angepasst werden.

Weiterhin ist aus Fig. 12 ersichtlich, dass die Reflektorflächen 22 wiederum aus einem gefüllten Kunststoff, hier einem metallgefüllten Kunststoff, bestehen, was im Rahmen eines Zweikomponentenverfahrens realisiert werden kann. Unterhalb der Fläche 21 erstreckt sich eine Temperaturfühleraufnahme 27, so dass ein Temperaturfühler 28 in die sich ergebende Vertiefung, wie in Fig. 12 gezeigt, eingesetzt werden kann. Die Aufnahme 27 ist zum Messbereich 8 hin dünnwandig ausgebildet, vergleiche Bereich 29, so dass der metallgefüllte Kunststoff der Fläche 21 eine Doppelfunktion erfüllt: Zum einen wird die akustische Impedanz für die Nutzung der Fläche 21 als reflektierende Fläche 21 erhöht, zum anderen aber auch die Wärmeleitfähigkeit erhöht, so dass der Temperaturfühler 28, trotzdem er nicht in unmittelbarem Kontakt mit dem Fluid steht, schnell auf Temperaturänderungen reagieren kann.

Es sei noch angemerkt, dass selbstverständlich auch in den Gehäusen 1a bis 1j eine Messrohr 26 und eine Messfühleraufnahme 27 vorgesehen werden können. Diese Merkmale der eben beschriebenen achten Ausführungsform sind mithin nicht auf dieses Beispiel beschränkt.

Fig. 13 zeigt in einer Explosionsansicht ein weiteres Ausführungsbeispiel eines erfindungsgemäßen Gehäuses 1l, das eine weitere, auch in Kombination mit den anderen hier beschriebenen Ausgestaltungsvarianten nutzbare Verbindungsart der Gehäuseteile 2, 3 darstellt. Ersichtlich weist das Gehäuseteil 3 in dieser Ausführungsform im Verbindungsbereich vier kreuzartige Vorsprünge 30 auf, die entsprechenden Einbuchtungen 31 des Gehäuseteils 2 im Verbindungsbereich formschlüssig entsprechen. Selbstverständlich sind auch andere formschlüssige, verdrehsichere Ausgestaltungen denkbar, über die die Gehäuseteile 2 und 3 zusammengesteckt werden können.

Seitlich weist das Gehäuseteil 2 zwei im vorliegenden Ausführungsbeispiel als Schlitze ausgebildete Öffnungen 32 auf, die auch die gegenüberliegenden seitlichen Einbuchtungen 31 durchqueren. Entsprechend weisen die seitlichen Vorsprünge 30 mit den Öffnungen 32, diese im Einbuchtungsbereich vervollständigende Öffnungen 33 auf. Die Öffnungen 32, 33 verlaufen parallel und dienen der Aufnahme eines im Wesentlichen U-förmigen Verbindungsbügels 34, der von oben in diese eingeschoben werden kann, um die Gehäuseteile 2, 3 zu verbinden.

Ersichtlich sind ferner im unteren Verbindungsbereich an dem Gehäuseteil 2 zu den Öffnungen 32 senkrechte, vom Querschnitt her runde Durchgangsöffnungen 35 vorgesehen, die mit einer entsprechenden Einbuchtung 36 an dem Verbindungsbügel 34 korrespondieren, so dass bei eingesetztem Bügel aufgrund des Fluchtens der Öffnungen 35 und der Einbuchtungen 36 eine Aufnahme für einen Stift 37 gebildet wird, der den Bügel 34 fixiert.

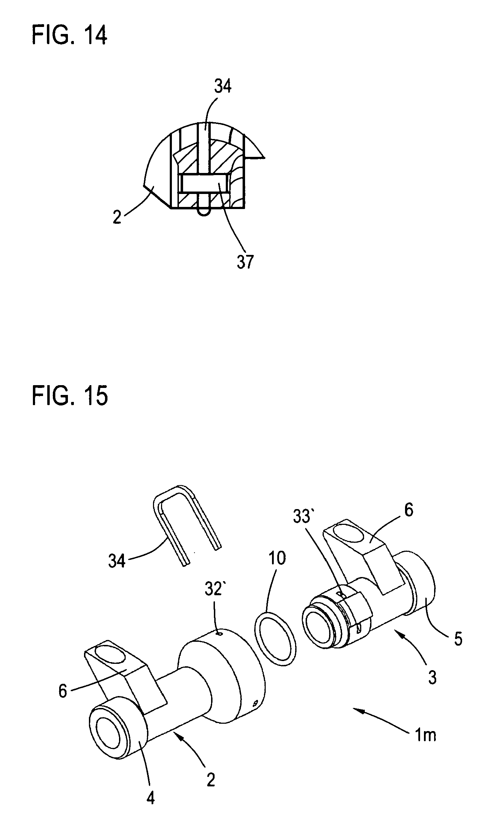

Dies ist genauer in Fig. 14 dargestellt, die einen Querschnitt durch den unteren Verbindungsbereich zeigt, während der Verbindungsbügel 24 und der Stift 37 eingesetzt sind und die Gehäuseteile 2, 3 verbunden sind.

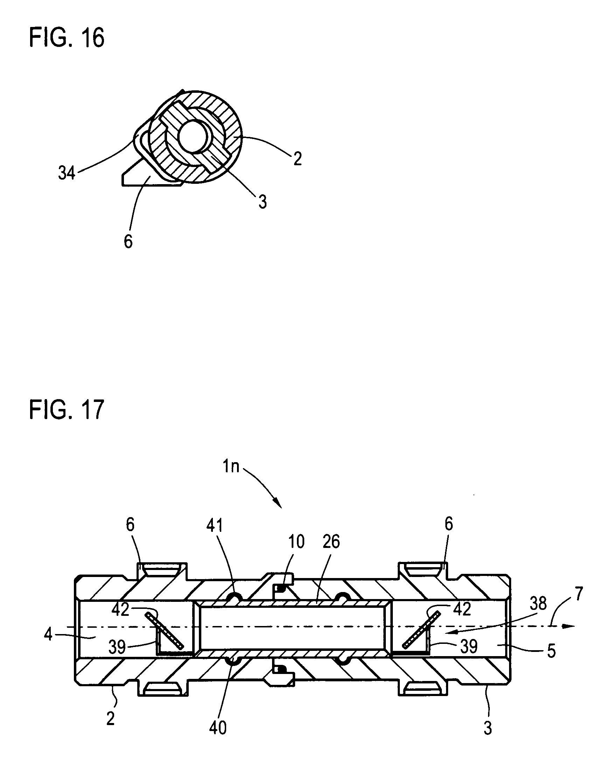

Fig. 15 zeigt, wiederum in Form einer Explosionsdarstellung, eine Variante der Verbindungsmöglichkeit mit einem Verbindungsbügel 34 an einem Gehäuse 1 m einer zehnten Ausführungsform. Ersichtlich sind hier Öffnungen 32', 33' asymmetrisch vorgesehen, nachdem die gezeigten Öffnungen 32', 33' gemeinsam eine nahe der Mitte verlaufende Aufnahme für einen Arm des Verbindungsbügels 34 bilden, während die als Randschlitz auf der gegenüberliegenden Seite ausgebildete Öffnungen 32' eher eine Führung für den anderen Arm des Verbindungsbügels 34 bildet, wie aus der Querschnittsansicht in Fig. 16 leicht ersichtlich ist.

### Eine Weiterbildung des Ausführungsbeispiels nach Fig. 11 und Fig. 12 zeigt die Fig. 17 in Form einer elften Ausführungsform eines Gehäuses 1 n in einem

Längsschnitt. Darin ist im Unterschied zu Fig. 11 und Fig. 12 nicht nur das Messrohr 26 innerhalb des Gehäuses 1 n aufgenommen, sondern ein ganzer Messeinsatz 38, der neben dem Messrohr 26 zwei Reflektorhalterungen 39 umfasst, an denen bereits Reflektoren 42 angeordnet sind. Zum Verbinden der Gehäuseteile 2, 3 ist hier die Variante gemäß Fig. 3 gewählt worden, jedoch sind auch andere hier beschriebene Varianten denkbar, so lange die Reflektorhalterungen 39 zur Messung korrekt bezüglich der Ankopplungsbereiche 6 orientiert und positioniert sind.

Ersichtlich weist das Messrohr 26 als Verdickungen ausgebildete Haltevorsprünge 40 auf, die als Aussparungen ausgebildeten Halterungsnuten 41 in den Gehäuseteilen 2, 3 korrespondieren, um den Messeinsatz 38 in Durchflussrichtung fest und verdrehsicher zu halten. Dabei sind die Halterungselemente 40, 41 im vorliegenden Beispiel im wesentlichen kreuzförmig ausgebildet, jedoch sind selbstverständlich beliebige Ausgestaltungen denkbar, um die Verschiebe- und Verdrehsicherheit herzustellen.

## Patentansprüche

1. Gehäuse (1a-1n) für eine Ultraschall-Messeinrichtung zur Messung eines Fluidflusses, umfassend einen Fluideinlass (4), einen Fluidauslass (5), einen Messbereich (8) mit einer Messtrecke und wenigstens zwei Ankopplungsbereiche (6), insbesondere Ankopplungsflächen, für einen Ultraschalltransducer, **dadurch gekennzeichnet, dass** das Gehäuse (1a-1 n) zwei im Bereich der Messstrecke verbundene und/oder verbindbare, getrennt hergestellte Gehäuseteile (2, 3) umfasst, wobei das den Fluideinlass (4) und das den Fluidauslass (5) umfassende Gehäuseteil (2, 3) jeweils wenigstens einen Ankopplungsbereich (6) umfassen.

2. Gehäuse nach Anspruch 1, **dadurch gekennzeichnet, dass** die beiden Gehäuseteile (2,3) im Wesentlichen symmetrisch und/oder identisch ausgeführt sind.

3. Gehäuse nach Anspruch 1 oder 2, **dadurch gekennzeichnet, dass** die Gehäuseteile (2, 3) spritzgegossen sind und/oder aus Kunststoff bestehen.

4. Gehäuse nach einem der Ansprüche 1 bis 3, **dadurch gekennzeichnet, dass** jedes der beiden Gehäuseteile (2, 3) eine aus dem Material des Gehäuses (1a-1n) ausgebildete Reflektorhalterung für einen Schallreflektor (20) umfasst.

5. Gehäuse nach einem der Ansprüche 1 bis 3, **dadurch gekennzeichnet, dass** jedes Gehäuseteil (2, 3) im Inneren wenigstens einen in das Gehäuseteil (2, 3) integrierten, insbesondere gegenüber eines Ankopplungsbereichs (6) angeordneten Schallreflektor (20) aufweist, wobei vorzugsweise vorgesehen ist, dass der Schallreflektor (20) als Teil des Gehäuseteils (2, 3) ausgebildet oder als insbesondere metallischer Schallreflektor (20) in das Gehäuseteil (2, 3) vergossen ist.

6. Gehäuse nach Anspruch 5, **dadurch gekennzeichnet, dass** der Schallreflektor (20) eine den Schall von dem Ankopplungsbereich (6) zu dem anderen Reflektor (21) und umgekehrt reflektierende Fläche (21) aufweist.

7. Gehäuse nach einem der vorangehenden Ansprüche, **dadurch gekennzeichnet, dass** die Gehäuseteile (2, 3) stoffschlüssig verbunden oder verbindbar sind, insbesondere durch eine Klebeverbindung und/oder eine Schweißverbindung.

8. Gehäuse nach einem der Ansprüche 1 bis 6, **dadurch gekennzeichnet, dass** die Gehäuseteile (2, 3) kraftschlüssig und/oder formschlüssig verbunden oder verbindbar sind.

9. Gehäuse nach Anspruch 8, **dadurch gekennzeichnet, dass** zur formschlüssigen Verbindung der Gehäuseteile (2, 3) ein Bajonettverschluss (19a, 19b) oder ein Verbindungsmaterial (25), insbesondere im Rahmen eines Zweikomponentenverfahrens eingebracht, oder ein verbindendes Bauelement (24), welches über ein insbesondere im Rahmen eines Zweikomponentenverfahrens eingebrachtes Verbindungsmaterial (25) mit den Gehäuseteilen (2, 3) verbunden wird, vorgesehen ist.

10. Gehäuse nach Anspruch 8, **dadurch gekennzeichnet, dass** zur kraftschlüssigen Verbindung der Gehäuseteile (2, 3) eine Flanschverbindung (13) und/oder eine mit einem Außengewinde (19) der Gehäuseteile (2, 3) korrespondierende Überwurfmutter (17) und/oder ein insbesondere u-förmiger Verbindungsbügel (34), der in entsprechende, insbesondere parallel verlaufende Aufnahmeöffnungen (32, 33, 32', 33') der Gehäuseteile (2, 3) eingeschoben ist, vorgesehen ist und/oder die Gehäuseteile (2, 3) mit zueinander korrespondierenden Gewinden (18, 19) versehen sind, insbesondere ein Außengewinde (19) an einem Gehäuseteil (2, 3) und ein korrespondierendes Innengewinde (18) an dem anderen Gehäuseteil (2, 3) vorgesehen ist..

11. Gehäuse nach einem der Ansprüche 8 bis 10, **dadurch gekennzeichnet, dass** zur Abdichtung der Verbindung zwischen den Gehäuseteilen (2, 3) ein Dichtelement, insbesondere ein Dichtring (10), vorgesehen ist.

12. Gehäuse nach einem der vorangehenden Ansprüche, **dadurch gekennzeichnet, dass** es eine insbesondere im Bereich einer Reflektorhalterung ausgebildete Temperaturfühleraufnahme (27), insbesondere eine Vertiefung mit einer zum Inneren des Gehäuses (1a-1n) hin zumindest teilweise dünneren Wand (29), aufweist.

13. Gehäuse nach einem der vorangehenden Ansprüche, **dadurch gekennzeichnet, dass** das Gehäuse (1 a-1 n) einen rohrartigen, den Durchmesser des Gehäuses (1 a-1 n) im Messbereich (8), insbesondere entlang der gesamten Messstrecke reduzierenden Einsatz, insbesondere ein Messrohr (26), oder einen ein Messrohr (26) und zwei Reflektorhalterungen (39) aufweisenden Messeinsatz (38) umfasst.

14. Gehäuse nach Anspruch 13, **dadurch gekennzeichnet, dass** der Messeinsatz (38), insbesondere außen an dem Messrohr (36) vorgesehene, Halterungselemente, insbesondere Halterungsvorsprünge (40) und/oder Halterungsnuten, aufweist, die mit Halterungselementen, insbesondere Halterungsnuten (41) und/oder Halterungsvorsprüngen, der Gehäuseteile (2, 3) korrespondieren, um den Messeinsatz (38) innerhalb der Gehäuseteile translations- und verdrehsicher zu halten.

15. Verfahren zur Herstellung eines Gehäuses nach einem der vorangehenden Ansprüche, **dadurch gekennzeichnet, dass** die zwei Gehäuseteile einzeln spritzgegossen werden, wobei insbesondere vorgesehen ist, dass während des Spritzgussvorgangs in den Gehäuseteilen eine Reflektorhalterung für einen Schallreflektor ausgebildet wird oder ein Schallreflektor aus dem Material des Gehäuseteils selber gegossen wird oder ein einen Schallreflektor bildendes Einlegeteil in den Gehäuseteilen vergossen wird.

16. Ultraschall-Messeinrichtung zur Messung eines Fluidflusses, umfassend ein Gehäuse (1 a-1 n) nach einem der Ansprüche 1 bis 14.
